# EUROPEAN PATENT SPECIFICATION

(11) **EP 3 914 827 B1**
(45) Date of publication and mention of the grant of the patent: **30.07.2025**
(21) Application number: 20828644.3
(22) Date of filing: 02.04.2020
(51) Int. Cl.: F03H 1/00, H01J 7/24, H01J 27/02, H01J 37/08, H05H 1/00, H05H 1/54

(54) **HALL-EFFECT THRUSTER**
HALLEFFEKT-STRAHLRUDER
PROPULSEUR À EFFET HALL

(43) Date of publication of application: 01.12.2021
(73) Proprietor: Orbion Space Technology, Inc., Houghton, MI 49931 (US)
(72) Inventor: SOMMERVILLE, Jason D., Houghton, MI 49931 (US)
(74) Representative: Marks & Clerk LLP
(86) International application number: PCT/US2020/026420
(87) International publication number: WO 2021/201871

(56) References cited:
- WO-A1-2015/031450
- WO-A1-2020/005290
- US-A- 5 973 447
- US-A1- 2002 145 090
- US-A1- 2002 145 389
- US-A1- 2005 237 000
- US-A1- 2006 076 872
- US-A1- 2006 186 837
- US-A1- 2008 136 309

## Description

### BACKGROUND

The present disclosure relates to Hall-effect thrusters (HETs) for on-orbit spacecraft propulsion, and more particularly to a net magnetic dipole moment generated by the HET.

WO2015031450 discloses a plasma propulsion system with no internal electrodes. Gas is flowed into an insulated axisymmetric plasma liner. A radio frequency antenna generates an inductive or helicon plasma discharge within the liner. The plasma is accelerated through a converging/diverging magnetic field out of the liner, generating thrust.

US5973447 discloses a plasma beam apparatus and method for the purpose of vacuum processing temperature sensitive materials at high discharge power and high processing rates. A gridless, closed or non-closed Hall-Current ion source is described which features a unique fluid-cooled anode with a shadowed gap through which ion source feed gases are introduced while depositing feed gases are injected into the plasma beam. The shadowed gap provides a well maintained, electrically active area at the anode surface which stays relatively free of nonconductive deposits. The anode discharge region is insulatively sealed to prevent discharges from migrating into the interior of the ion source. Thin vacuum gaps are also used between anode and non-anode components in order to preserve electrical isolation of the anode when depositing conductive coatings. The magnetic field of the Hall-Current ion source is produced by an electromagnet driven either by the discharge current or a periodically alternating current.

US2005237000 discloses a Hall-type ion source for generation of ion beams for technological applications presents itself a hybrid ion source, where properties of closed drift systems and end-Hall ion sources are combined for more efficient operation. An ion source has shorter central magnetic pole than regular closed drift ion source with magnetic screens that provide positive magnetic gradient in an ion source's discharge channel. An ion source with these combined properties has higher ratio of ion beam current to discharge current than end-Hall ion source and wider range of discharge parameters than closed drift ion source.

US2006186837 A1 discloses a Hall thruster with a shared magnetic structure including a plurality of plasma accelerators establishing a transverse magnetic field in each of the plurality of plasma accelerators that creates an impedance to the flow of electrons toward the anode in each of the plurality of plasma accelerators and enables ionization of a gas moving through one or more of the plurality of plasma accelerators. The impedance localizes an axial electric field in the plurality of plasma accelerators for accelerating ionized gas through the one or more of the plurality of plasma accelerators to create thrust.

### SUMMARY OF THE INVENTION

Aspects of the invention are provided according to the appended claims: specifically, the present invention provides a Hall-effect thruster assembly as defined in claim 1.

Preferred embodiments of the invention are defined in the dependent claims.

Other aspects of the disclosure will become apparent by consideration of the detailed description and accompanying drawings.

### BRIEF DESCRIPTION OF THE DRAWINGS

FIG. 1 is an external perspective view of a portion of a conventional HET.
FIG. 2 is a longitudinal schematic cross-sectional view of the conventional HET of FIG. 1 taken along line 2-2 and showing an arrangement of magnetic field sources and magnetic field flux guides.
FIG. 3 is a longitudinal schematic cross-sectional view of a HET assembly in accordance with the disclosure.
FIG. 4 is a perspective view of another HET assembly in accordance with the disclosure, illustrating a mount assembly of the HET.
FIG. 5 is a top view of the HET assembly of FIG 4.
FIG. 6 is a top perspective view of the mount assembly only of the HET assembly of FIG. 4.
FIG. 7 is an exploded view of the mount assembly of FIG. 6, illustrating a position of a structure configured to support a null magnet.
FIG. 8 is a longitudinal schematic cross-sectional view of another HET assembly in accordance with the disclosure.
FIG. 9 is a longitudinal schematic cross-sectional view of another HET assembly in accordance with the disclosure.

Before any embodiments of the disclosure are explained in detail, it is to be understood that the disclosure is not limited in its application to the details of the formation and arrangement of components set forth in the following description or illustrated in the accompanying drawings. The disclosure is capable of supporting other embodiments and of being practiced or of being carried out in various ways. Also, it is to be understood that the phraseology and terminology used herein is for the purpose of description and should not be regarded as limiting.

### DETAILED DESCRIPTION

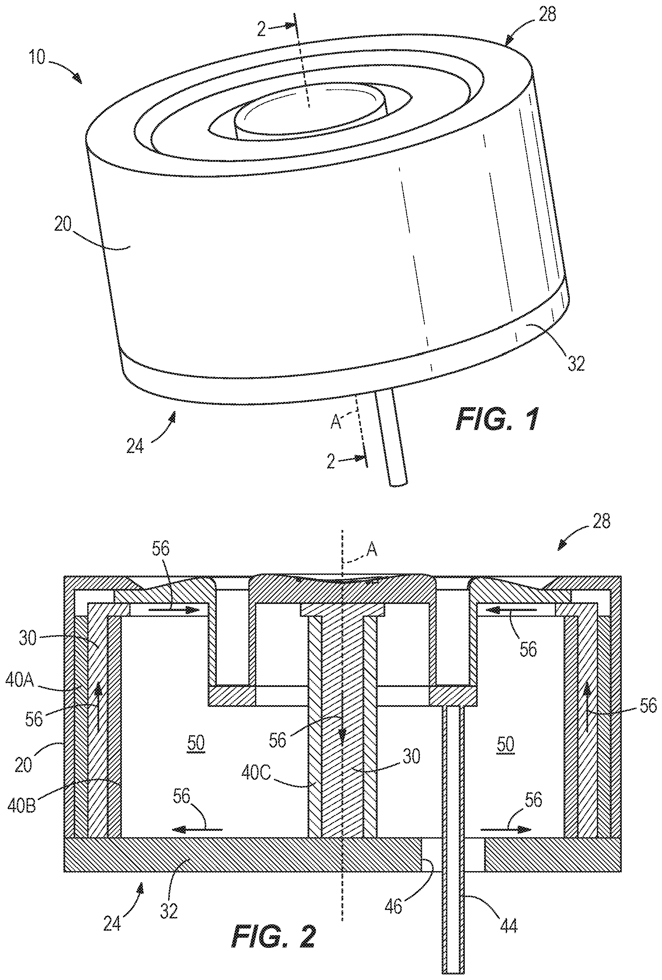

FIGS. 1 and 2 illustrate a Hall-effect thruster 10 (HET) for spacecraft propulsion. The HET 10 includes a housing 20 having magnetic sources and material positioned therein for creating a magnetic circuit.

Referring to FIG. 2, in a conventional concentric arrangement of magnetic field sources 40A-40C and magnetic field flux guides 30, 32 within the housing 20, a discharge chamber 50 is configured to receive propellant (e.g., Xenon, Krypton, Argon, etc.). More specifically, the propellant is introduced into the discharge chamber 50 through a plurality of tubes 44 extending through respective openings 46 (only one of which is shown in FIG. 2). Voltage applied between a cathode (not shown) positioned at or near a first, discharge end 28 and an anode (not shown) positioned at or near a second end 24 forms an electric field extending axially relative to a longitudinal axis A within the discharge chamber 50. A magnetic circuit (i.e., arrows 56) including magnetic field sources 40A-40C and magnetic field flux guide material 30 is configured to create a radially-oriented magnetic field at the first end 28. Electrons subjected to the magnetic field are used to ionize the propellant. Subsequently, the propellant ions are accelerated by the electric field for generating a thrust at the first end 28. Accordingly, the magnetic field sources 40A-40C and/or the magnetic field flux guides 30, 32 may be termed as a magnetic field generator for producing thrust of a Hall-effect thruster. In other embodiments, the magnetic field generator may represent the elements of a Hall-effect thruster that generate the magnetic field for producing the thrust.

As shown in FIG. 2, the magnetic field sources 40A-40C (e.g., electromagnetic coils or permanent magnets) are oriented such that their magnetic moments are axial relative to the longitudinal axis A from proximate the first end 28 to proximate the second end 24. The illustrated magnetic field sources 40A-40C form generally continuous annular shapes about the longitudinal axis A, but in other embodiments such sources 40A-40C may comprise a plurality of discrete or otherwise spaced sources. In the illustrated embodiment, the HET 10 includes three electromagnetic coils as the magnetic field sources 40A-40C, each positioned relative to the magnetic field flux guide material 30. In other constructions, the magnetic circuit 56 may only include one of the magnetic field sources 40A-40C. Additional magnetic field flux guide material 30 in the form of a plate 32 with high magnetic relative permeability positioned at the second end 24 completes the magnetic circuit 56.

Because of the use of the magnetic field sources 40A-40C (e.g., electromagnetic coils or permanent magnets) and magnetic field flux guide material 30, the HET 10 produces a predetermined magnetic dipole moment (e.g., measured in Ampere square meter (A-m²)), which may now be referred to herein as the HET magnetic dipole moment. For example, the HET magnetic dipole moment may be between 2.5 A-m² and 4.5 A-m² (plus or minus (±)) in the direction of the longitudinal axis A. In some embodiments, the HET magnetic dipole moment is about 3.5 A-m² (±). This moment may interact with other magnetic fields generated from other sources to produce a torque on the HET, and ultimately on a spacecraft on which the HET 10 is mounted. Other magnetic fields may include, for example, Earth's magnetic field, magnetic fields produced by other components on the spacecraft, etc. For example, when the spacecraft is flying in low Earth orbit, Earth's magnetic field may interact strongly with the magnetic field of the HET 10, thereby applying a significant torque to the spacecraft.

In addition, the magnetic field (magnetic dipole moment) of the HET 10 may be represented by a plurality of flux lines extending relative to the longitudinal axis A through the first and second ends 28, 24, respectively, of the HET 10. The flux lines (not shown) define an overall shape of the HET magnetic field. The flux lines can be affected by other magnetic fields generated from external magnetic sources proximate the HET 10.

The use of nulling magnets, shielding, or a combination of both in the HET 10 may reduce or achieve a near-zero net magnetic dipole moment of the HET 10 itself (e.g., ±0.5 A-m²) without affecting the actual magnetic circuit 56 of the magnetic field sources 40A, 40B and magnetic field flux guide material 30, thereby reducing the torque applied to the spacecraft by the other magnetic fields. For example, in some embodiments, the nulling magnets produce a compensating magnetic dipole moment, and a combination of the HET magnetic dipole moment and the compensating magnetic dipole moment results in a net magnetic dipole moment of the entire system of the HET 10. In other embodiments, the shielding or a combination of the nulling magnets and shielding inhibit or prevent the HET magnetic dipole moment from interacting with other magnetic dipole moments outside of the HET 10. Accordingly, the nulling magnets, shielding, or a combination of both in the HET 10 reduce an absolute value of the HET magnetic dipole moment in a direction along the longitudinal axis A. Furthermore, the nulling magnets, shielding, or a combination of both, may be positioned relative to the HET 10 to minimize or reduce the effect of the magnetic fields generated from the other sources on the overall shape of the magnetic field of the HET 10 proximate the first end 28 of the HET 10.

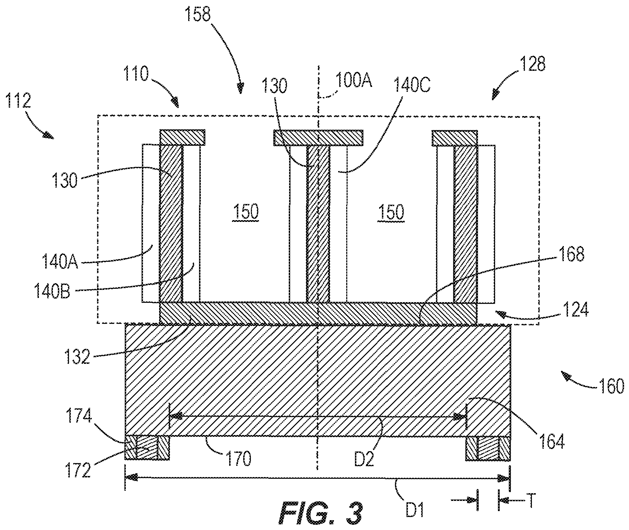

FIG. 3 illustrates schematically an assembly 112 of a first HET 110 embodying the present disclosure, and like elements have been given the same reference numbers plus 100. The assembly 112 includes a mount assembly 160 and the HET 110. The HET 110 includes magnetic field sources 140A-140C, magnetic field flux guide material 130, plate 132, and a discharge chamber 150 defining a longitudinal axis 100A. A discharge area 158 of the HET 110 is positioned proximate a first end 128 of the HET 110.

The mount assembly 160 includes a body 164 couplable to the HET 110. More specifically, the body 164 includes a first side 168 and a second side 170 spaced from the first side 168. A second end 124 of the HET 110 opposite the first end 128 is coupled to the first side 168 of the body 164. The mount assembly 160 is formed of non-magnetic material (e.g., aluminum). The mount assembly 160 is configured to support the HET 110 and is configured to securably retain the HET 110 to the spacecraft.

The mount assembly 160 includes a plurality of magnetic elements 172 (e.g., electromagnetic coils or permanent magnets) and a structure 174 configured to receive or contain the magnetic elements 172. In the illustrated embodiment, the plurality of magnetic elements 172 includes one element 172 positioned on the second side 170 of the body 164. The illustrated element 172 in one embodiment is a single, toroidal magnet radially spaced from the longitudinal axis 100A. In other embodiments, the plurality of magnetic elements 172 may be one or more discrete magnets positioned relative to the longitudinal axis 100A. These discrete magnetic elements may each be formed by an arc-shaped segment, rod-like shaped segment, box-like shaped segment, etc. Still further, the magnetic elements 172 may be positioned at select radial positions relative to the longitudinal axis 100A.

In the illustrated embodiment, the structure 174 has a shape matching with or complementary of the magnetic element 172. In particular, the illustrated structure 174 has a cylindrical shape with an outer diameter D1 and an inner diameter D2. The outer diameter D1 and the inner diameter D2 may be selected based on a diameter of the magnetic element 172. Additionally, the radial position of the magnetic element 172 relative to the longitudinal axis 100A is based on the diameter of the magnetic element 172. As such, the diameter may be selected based on positioning the magnetic element 172 radially closer to or farther from the longitudinal axis 100A.

In addition, the magnetic element 172 has a thickness T. The thickness T is the difference between the outer diameter D1 of the structure 174 and the inner diameter D2 of the structure 174. As such, the outer diameter D1 and the inner diameter D2 may also be selected based on the thickness T of the magnetic element 172.

Still further, the plurality of magnetic elements 172 may be one or more permanent magnets positioned radially relative to the longitudinal axis 100A. As such, the structure 174 may be configured to retain the one or more permanent magnets.

The plurality of magnetic elements 172 are collectively configured to produce an independent magnetic dipole moment and counteract the HET magnetic dipole moment produced by the magnetic field sources 140A-140C and the magnetic field flux guide material 130, without significantly disrupting the magnetic field within the discharge chamber 150 and the discharge area 158 (i.e., affecting the overall shape of the magnetic field or the orientation of the magnetic field flux lines proximate the first end 128). In particular, the magnitude and direction of the magnetic dipole moment of the magnetic elements 172 is selected for reducing the absolute value of the magnetic dipole moment of the HET 110 by a certain amount, one example of which may be a predetermined percentage (%) in a direction along the longitudinal axis 100A, which in some applications may result in a near-zero net magnetic dipole moment (Am²) for the system. In other embodiments, the absolute value of the magnetic dipole moment of the HET 110 may be reduced by a set numerical value (e.g., value having unit A-m²). Accordingly, the plurality of magnetic elements 172 may be referred to as null magnetic elements 172 or compensating elements 172 configured to compensate for the HET magnetic dipole moment of the HET 110. The magnetic dipole moment of the magnetic elements 172 may be based on one or more of the following: the type of magnetic elements 172, the number of magnetic elements 172, the size (e.g., diameter, thickness) of the magnetic elements 172, and/or the radial position of the magnetic element 172 relative to the longitudinal axis 100A. The magnetic elements 172 produce the compensating magnetic dipole moment.

In some embodiments, the plurality of magnetic elements 172 is configured to reduce the HET magnetic dipole moment of the HET 110 by between forty and ninety-five percent. In other embodiments, the plurality of magnetic elements 172 is configured to reduce the HET magnetic dipole moment of the HET 110 by between fifty and ninety-five percent. In yet other embodiments, the plurality of magnetic elements 172 is configured to reduce the HET magnetic dipole moment of the HET 110 by between sixty and ninety-five percent. In yet still other embodiments, the plurality of magnetic elements 172 is configured to reduce the HET magnetic dipole moment of the HET 110 by between seventy and ninety-five percent. For example, in the illustrated embodiment, the magnetic element 172 is configured to reduce the HET magnetic dipole moment of the HET 110 from about 3.5 A-m² (±) to about 0.4 A-m² (±) such that the HET magnetic dipole moment is reduced by about ninety percent.

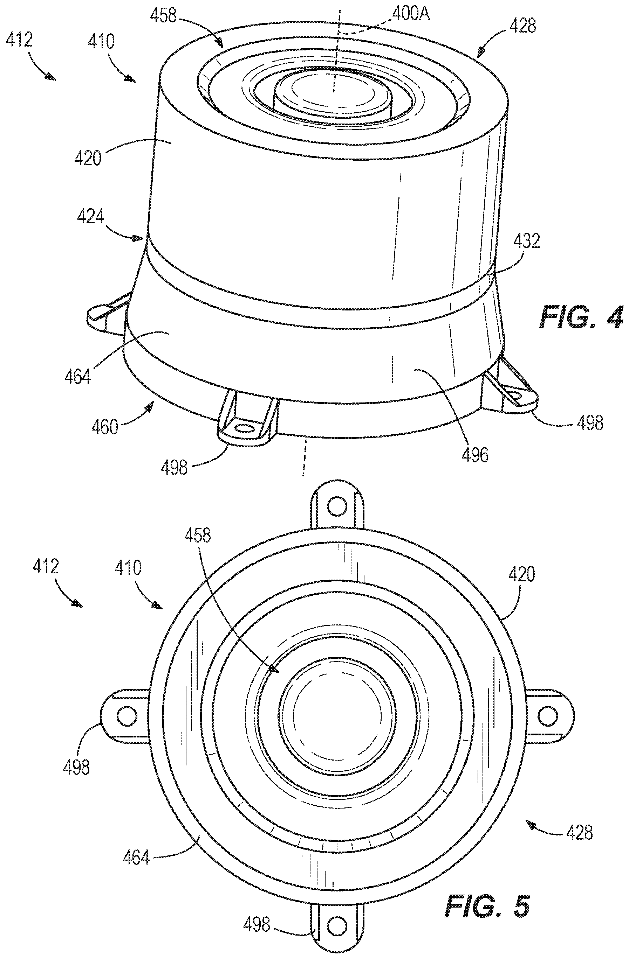

FIGS. 4-7 illustrate one example of an assembly 412 of the first HET 110 or portions thereof embodying the present disclosure, and like elements have been given the same reference numbers as the HET assembly 112 plus 300. The assembly 412 includes a mount assembly 460 and the HET 410. The HET 410 includes magnetic field sources, magnetic field flux guide material, and a discharge chamber (not shown; but see magnetic field sources 140A-140C, magnetic field flux guide material 130, and discharge chamber 150 of the HET 110 of FIGS 1-2) at least partially positioned within a housing 420. The illustrated HET 410 also includes a plate 432. The HET 410 includes the housing 420, which as illustrated in FIG. 4 has a cylindrical shape. The HET 410 defines a longitudinal axis 400A. A discharge area 458 of the HET 410 is positioned proximate a first end 428 of the HET 410.

The mount assembly 460 is adjacent to the housing 420. The mount assembly 460 includes a body 464. The illustrated body 464 is positioned proximate a second end 424 of the HET 410, opposite the first end 428. In the illustrated embodiment, the body 464 is coupled directly or indirectly to the plate 432 of the HET 410 (e.g., such as by fasteners). For example, the plate 432 or the body 464 includes a plurality of apertures, each aperture configured to receive a respective bolt for coupling the plate 432 and the body 464 together. In other embodiments, the body 464 may be coupled to the HET 410 by other securement means such as welding, and/or may be coupled at other locations of the HET 410 (e.g., magnetic flux guide material, magnetic field sources, etc.). Accordingly, the second end 424 of the HET 410 is coupled to a first side 468 of the body 464.

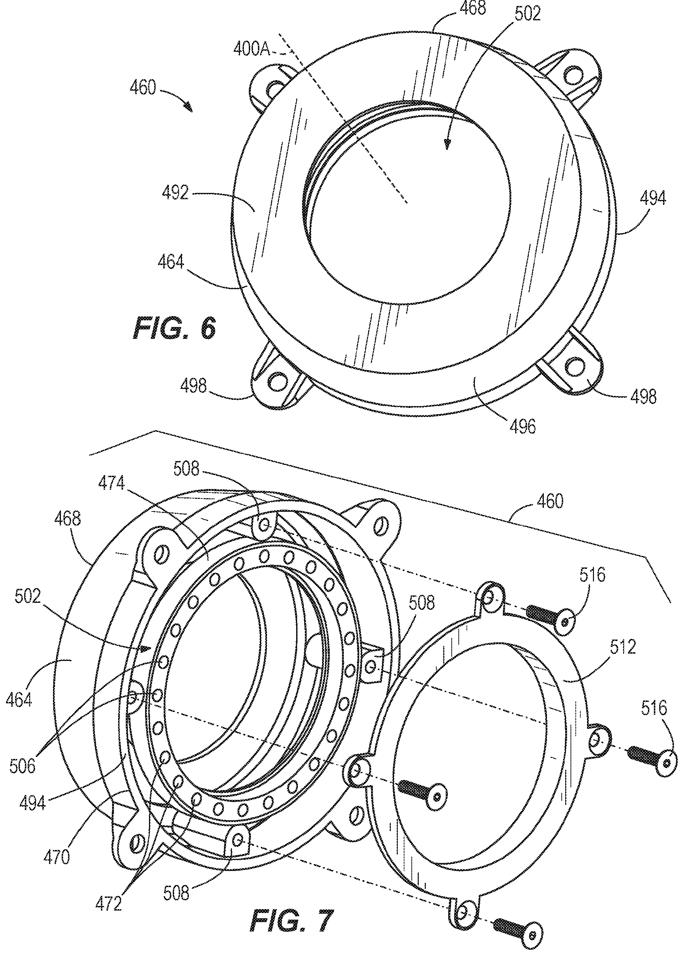

With particular reference to FIGS. 6-7, the body 464 includes a first surface 492 defining the first side 468. A second annular surface 494 at a second side 470 of the body 464 opposite the first side 468 faces away from the magnetic field sources and the magnetic field flux guide material. Furthermore, the illustrated body 464 has a generally annular shape formed by a circumferential surface 496 extending from the first side 468 to the second side 470. In other words, the body 464 has a frustoconical shape.

The mount assembly 460 (i.e., the body 464) is formed of non-magnetic material (e.g., aluminum). In addition, the mount assembly 460 is configured to support the HET 410 and is configured to securably retain the HET 410 to the spacecraft. The body 464 further includes a plurality of protrusions 498 extending away from the circumferential surface 496 proximate the second surface 494. The protrusions 498 are configured to securably retain the HET 410 to the spacecraft. In the illustrated embodiment, the protrusions 498 are integral with the body 464; however, in other embodiments, the protrusions 498 may be separate but secured to the body 464. Still further, in other embodiments, the mount assembly 460 may include other structure that support the protrusions 498 or replace the protrusions 498 (e.g., mounting ring, brackets, etc.) for securably retaining the HET 410 to the spacecraft.

With particular reference to FIG. 7, the body 464 includes a cavity 502 defined radially inward of the circumferential surface 496 and between the first and second sides 468, 470, respectively. The body 464 further includes a receptacle 474 positioned within the cavity 502 and configured to retain a plurality of magnetic elements 472. In the illustrated embodiment, the mount assembly 460 includes twenty-four discrete magnets 472 positioned equidistantly and circumferentially about the longitudinal axis 400A. Each magnet 472 is received within a respective aperture 506 defined by the receptacle 474. Alternatively, the plurality of magnetic elements 472 may be one discrete magnet, or one or more electromagnetic coils.

As shown in FIG. 7, in the illustrated embodiment, the mount assembly 460 further includes a plurality of projections 508 and a retaining member 512 (e.g., plate). The projections 508 extend inwardly from the circumferential surface 496. The retaining member 512 is coupled to the projections 508 by fasteners 516. The illustrated projections 508 are axially recessed within the cavity 502 relative to the longitudinal axis 400A. The retaining member 512 is positioned proximate the second side 470 and configured to retain the plurality of magnets 472 and the receptacle 474 within the cavity 502. More specifically, in the illustrated embodiment, the plurality of magnets 472 and the receptacle 474 are supported by the retaining member 512 proximate the second side 470 of the body 464. As such, the magnets 472/receptacle 474 are/is supported by the body 464/retaining member 512.

As discussed with respect to the assembly of the first HET 110, the plurality of magnetic elements 472 of the HET 410 is configured to produce the compensating magnetic dipole moment. In particular, the magnitude and direction of the magnetic dipole moment of the magnetic elements 472 is selected for reducing the absolute value of the magnetic dipole moment of the HET 410 by a certain amount, one example of which may be a predetermined percentage (%) in a direction along the longitudinal axis 400A. In other words, the compensating magnetic dipole moment is configured to reduce the HET magnetic dipole moment toward the near-zero net magnetic dipole moment (A-m²). In other embodiments, the absolute value of the magnetic dipole moment of the HET 410 may be reduced by a set numerical value (e.g., value having unit A-m²). The plurality of magnetic elements 472 are configured to counteract the HET magnetic dipole moment produced by the magnetic field sources and the magnetic field flux guide material 430, without significantly affecting the magnetic field within the discharge chamber 450 and the discharge area 458 (i.e., affecting the overall shape of the magnetic field or the orientation of the magnetic field flux lines proximate the first end 428).

In operation, with reference to the embodiments of the first HET 110, and its corresponding example of an HET 410 as shown in FIGS. 3 and 4-7, respectively, the magnetic circuit 56 (i.e., the magnetic field sources 140A-140C and the magnetic field flux guide material 130, 430) generates the HET magnetic dipole moment. The magnetic elements 172 generate a compensating or counteracting magnetic dipole moment, thereby reducing the HET magnetic dipole moment of the HET 110, 410 by the predetermined percentage (%) toward the near-zero net magnetic dipole moment (A-m²).

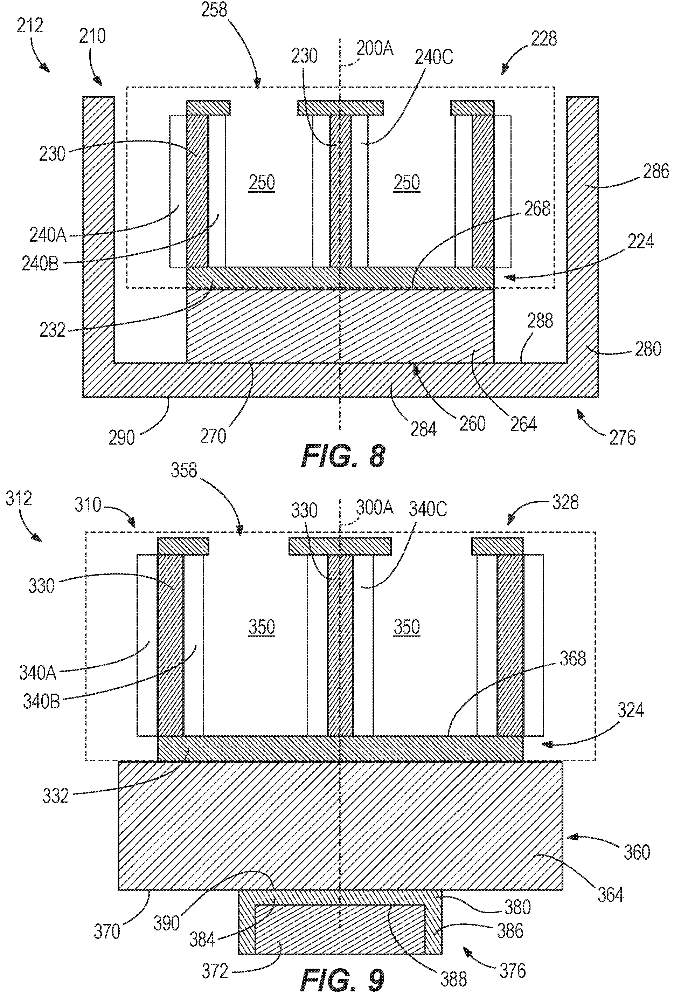

FIG. 8 illustrates schematically an assembly 212 of a second HET 210 embodying the present disclosure, and like elements have been given the same reference numbers as the HET assembly 112 plus 100. The assembly 212 includes a mount assembly 260 and the HET 210. The HET 210 includes magnetic field sources 240A-240C, magnetic flux guide material 230, plate 232, and a discharge chamber 250 defining a longitudinal axis 200A. A discharge area 258 of the HET 210 is positioned proximate a first end 228 of the HET 210.

The mount assembly 260 includes a body 264 coupable to the magnetic field flux guide material 230/magnetic field sources 240A-240C. More specifically, the body 264 includes a first side 268 and a second side 270 spaced from the first side 268. A second end 224 of the HET 210 opposite the first end 228 is coupled to the first side 268 of the body 264. The mount assembly 260 is formed of non-magnetic material (e.g., aluminum). The mount assembly 260 is configured to support the HET 210 and is configured to securably retain the HET 210 to the spacecraft.

The HET assembly 212 further includes a shield assembly 276. In the illustrated embodiment, the shield assembly 276 includes a housing 280 having a first portion 284 and a second portion 286 extending axially therefrom relative to the longitudinal axis 200A. The first portion 284 has an inner surface 288 in facing relationship with a side 270 of the body 264. The first portion 284 further includes an outer surface 290. The second portion 286 radially surrounds the HET 210 and the mount assembly 260 relative to the longitudinal axis 200A. Although not shown, portions of the mount assembly 260 may extend through the first portion 284 of the housing 280 for coupling the mount assembly 260 to the spacecraft.

The housing 280 is formed by material having high permeability (i.e., soft magnetic material such as iron, ferrite, Mu-metal, Hyperco^{®}, etc.). The housing 280 is configured to shield the magnetic field sources 240A-240C and the magnetic field flux guide material 230 for reducing the absolute value of the HET magnetic dipole moment of the HET 210 by a predetermined percentage (%) in a direction along the longitudinal axis 200A. In other words, the housing 280 is configured to reduce the HET magnetic dipole moment toward the near-zero net magnetic dipole moment (A-m²). More specifically, the housing 280 is configured to inhibit or reduce interaction of the magnetic field generated by the magnetic field sources 240A-240C and the magnetic field flux guide material 230 with other magnetic fields (e.g., Earth's magnetic field) without significantly affecting the magnetic field within the discharge chamber 250 and the discharge area 258 (i.e., affecting the overall shape of the magnetic field or the orientation of the magnetic field flux lines proximate the first end 228). Accordingly, the shield assembly 276 may be referred to as a shield configuration. The shielding capabilities of the shield assembly 276 may be based on one or more of the following: the type of material, the thickness of the first and/or second portions 284, 286, respectively, and/or the radial position of the second portion 286 relative to the longitudinal axis 200A.

In some embodiments, the shield assembly 276 is configured to reduce the HET magnetic dipole moment of the HET 210 by between thirty and seventy percent. In other embodiments, the shield assembly 276 is configured to reduce the HET magnetic dipole moment of the HET 210 by between forty and sixty percent. For example, the shield assembly 276 is configured to reduce the HET magnetic dipole moment of the HET 210 from about 3.5 A-m² (±) to about 1.9 A-m² (±) such that the HET magnetic dipole moment is reduced by about fifty percent.

In operation, with reference to FIG. 8, the magnetic circuit 56 generates the HET magnetic dipole moment. The shield assembly 276 shields the HET magnetic dipole moment created by the magnetic circuit 56 (i.e., the magnetic field sources 240A-240C and the magnetic field flux guide material 230), thereby reducing the HET magnetic dipole moment of the HET 210 by the predetermined percentage (%) toward the near-zero net magnetic dipole moment (Am²).

FIG. 9 illustrates schematically an assembly 312 of a third HET 310 embodying the present disclosure, and includes a combination of the magnetic elements 172 from the first HET assembly 112 and the shield assembly 276 from the second HET assembly 212. Like elements as the first HET assembly 112 have been given the same reference numbers plus 200, and like elements as the second HET assembly 212 have been given the same reference numbers plus 100. The assembly 312 includes a mount assembly 360 and the HET 310. The HET 310 includes magnetic field sources 340A-340C, magnetic field flux guide material 330, plate 332, and a discharge chamber 350 defining a longitudinal axis 300A. A discharge area 358 of the HET 310 is positioned proximate a first end 328 of the HET 310.

The mount assembly 360 includes a body 364 coupable to the magnetic field flux guide material 330/magnetic field sources 340A-340C. More specifically, the body 364 includes a first side 368 and a second side 370 spaced from the first side 368. A second end 324 of the HET 310 opposite the first end 328 is coupled to the first side 368 of the body 364. The mount assembly 360 is formed of non-magnetic material (e.g., aluminum). The mount assembly 360 is configured to support the HET 310 and is configured to securably retain the HET 310 to the spacecraft.

The mount assembly 360 includes a plurality of magnetic elements 372 (e.g., electromagnetic coils or permanent magnets). In the illustrated embodiment, the plurality of magnetic elements 372 includes one element 372 positioned proximate and spaced from the second side 370 of the body 364. The element 372 is a single, cylindrical magnet positioned concentrically with the longitudinal axis 300A. In other embodiments, the plurality of magnetic elements 372 may be one or more discrete magnets positioned at a selected radial location relative to the longitudinal axis 300A. These discrete magnetic elements may each be formed by an arc-shaped segment, rod-like shaped segment, box-like shaped segment, etc., positioned at predetermined radial positions relative to the longitudinal axis 300A. Still further, the plurality of magnetic elements 372 may be one or more electromagnetic coils positioned radially relative to the longitudinal axis 300A. The plurality of magnetic elements 372 is configured to produce a magnetic dipole moment.

The HET assembly 312 further includes a shield assembly 376. In the illustrated embodiment, the shield assembly 376 includes a housing 380 having a first portion 384 and a second portion 386 extending axially therefrom relative to the longitudinal axis 300A. The first portion 384 defines an inner surface 388 in facing relationship with the magnetic element 372. The first portion 384 further includes an outer surface 390 in facing relationship with the second side 370 of the body 364. The second portion 386 radially surrounds the magnetic element 372 relative to the longitudinal axis 300A. Although not shown, portions of the mount assembly 360 may extend around or through the shield assembly 376 for coupling the mount assembly 360 to the spacecraft.

The housing 380 is formed by material having high permeability (i.e., soft magnetic material such as iron, Mu-metal, Hyperco^{®}, etc.). The magnitude and direction of the magnetic dipole moment of the plurality of magnetic elements 372 is selected for reducing the absolute value of the magnetic dipole moment of the HET 310 by a certain amount, one example of which may be a predetermined percentage (%), in a direction along the longitudinal axis 300A. In other embodiments, the absolute value of the magnetic dipole moment of the HET 310 may be reduced by a numerical value (e.g., value having units A-m²). Accordingly, the plurality of magnetic elements 372 may be referred to as null magnetic elements 372 or compensating elements 372 configured to compensate for the HET magnetic dipole moment of the HET 310. The housing 380 is configured to shield the HET 310 from the magnetic element 372 for reducing or constraining the effect of the compensating elements 372 on the magnetic field (i.e., the flux lines) proximate the first end 328 while facilitating the reduction of the absolute value of the HET magnetic dipole moment of the HET 310 by a predetermined percentage (%) in a direction along the longitudinal axis 300A. In other words, the compensating magnetic elements 372 are configured to reduce the HET magnetic dipole moment toward the near-zero net magnetic dipole moment (A-m²), while the housing 380 is configured to reduce or constrain the effect of the compensating magnetic elements 372 on the magnetic field of the HET 310 proximate the first end 328. The combination of the plurality of magnetic elements 372 and the shield assembly 376 is configured to counteract the HET magnetic dipole moment produced by the magnetic field sources 340A-340C and the magnetic field flux guide material 330, without significantly affecting the magnetic field within the discharge chamber 350 and the discharge area 358 (i.e., affecting the overall shape of the magnetic field or the orientation of the magnetic field flux lines proximate the first end 328).

In some embodiments, the plurality of magnetic elements 372/shield assembly 376 is configured to reduce the HET magnetic dipole moment of the HET 310 by between forty and ninety-nine percent. In other embodiments, the plurality of magnetic elements 372/shield assembly 376 is configured to reduce the HET magnetic dipole moment of the HET 310 by between fifty and ninety-nine percent. In yet other embodiments, the plurality of magnetic elements 372/shield assembly 376 is configured to reduce the HET magnetic dipole moment of the HET 310 by between sixty and ninety-nine percent. In yet still other embodiments, the plurality of magnetic elements 372/shield assembly 376 is configured to reduce the HET magnetic dipole moment of the HET 310 by between seventy and ninety-nine percent. For example, the magnetic elements 372/shield assembly 376 is configured to reduce the HET magnetic dipole moment of the HET 310 from about 3.5 A-m² (±) to about 0.0156 A-m² (±) such that the HET magnetic dipole moment is reduced by about ninety-eight percent.

In operation, with reference to FIG. 9, the magnetic circuit 56 generates the HET magnetic dipole moment. The shield assembly 376 shields the HET magnetic dipole moment created by the magnetic elements 372, thereby reducing the HET magnetic dipole moment of the HET 310 by the predetermined percentage (%) toward the near-zero net magnetic dipole moment (A-m²).

Thus, the disclosure provides, among other things, an HET assembly 112, 212, 312, 412 configured to have a near-zero net magnetic dipole moment without significantly affecting the magnetic field within a discharge chamber 150, 250, 350, 450 and the discharge area 158, 258, 358, 458, respectively. Specifically, the HET assembly 112, 212, 312, 412 includes compensating elements 172, 372 and/or a shield assembly 276, 376 for achieving the near-zero net magnetic dipole moment. The compensating elements 172, 372 and/or the shield assembly 276, 376 may reduce or inhibit the interaction between the HET magnetic dipole moment of the HET 110, 210, 310, 410 and magnetic dipole moments generated by other magnetic fields such that torque applied to a spacecraft may be lowered.

Although the disclosure has been described in detail with reference to certain preferred embodiments, variations and modifications exist within the scope of the invention. The scope of the invention shall be determined by the appended claims.

## Claims

1. A Hall-effect thruster assembly (112, 312, 412) comprising:
a Hall-effect thruster (110, 310, 410) including a plurality of magnetic sources (140, 340) for creating a first magnetic circuit (56), the plurality of magnetic sources positioned between a first end (128, 328, 428) and a second, opposite end (124, 324, 424) of the Hall-effect thruster, the plurality of magnetic sources defining a longitudinal axis (100A, 300A, 400A) extending through the first end and the second end, the first end configured as a discharge end, the plurality of magnetic sources being configured such that during operation of the Hall-effect thruster, the plurality of magnetic sources collectively create the first magnetic circuit having a magnetic dipole moment;
a mount assembly (160, 360, 460) coupled to the second end, the mount assembly configured to secure the plurality of magnetic sources to a spacecraft; and
**characterised by**
a magnetic element (172, 372, 472) supported by the mount assembly, the magnetic element positioned relative to the plurality of magnetic sources by the mount assembly such that during operation of the Hall-effect thruster, the magnetic element produces a compensating magnetic dipole moment cooperative with the magnetic dipole moment of the Hall-effect thruster to reduce the absolute value of the magnetic dipole moment of the Hall-effect thruster in the direction along the longitudinal axis.

2. The Hall-effect thruster of claim 1, wherein the magnetic element (172, 372, 472) is one of a discrete magnet or an electromagnetic coil.

3. The Hall-effect thruster of claim 1, wherein the mount assembly (160, 360, 472) includes a body (164) and a support member coupling the magnetic element (172, 372, 472) to the body, and wherein the support member is configured to axially space the magnetic element from the plurality of magnetic sources relative to the longitudinal axis.

4. The Hall-effect thruster of claim 1, wherein the magnetic element (172, 372, 472) includes two or more discrete magnets, each discrete magnet formed by one selected from the group comprising: an arc-shaped segment, a rod-like segment, or a box-like segment.

## Patentansprüche

1. Hall-Effekt-Triebwerksanordnung (112, 312, 412), Folgendes umfassend:
ein Hall-Effekt-Triebwerk (110, 310, 410), das eine Vielzahl von Magnetquellen (140, 340) zum Erzeugen einer ersten Magnetschaltung (56) einschließt, wobei die Vielzahl von Magnetquellen zwischen einem ersten Ende (128, 328, 428) und einem zweiten, gegenüberliegenden Ende (124, 324, 424) des Hall-Effekt-Triebwerks positioniert ist, wobei die Vielzahl von Magnetquellen eine Längsachse (100A, 300A, 400A) definiert, die sich durch das erste Ende und das zweite Ende erstreckt, wobei das erste Ende als Entladungsende konfiguriert ist, wobei die Vielzahl von Magnetquellen so konfiguriert ist, dass während des Betriebs des Hall-Effekt-Triebwerks die Vielzahl von Magnetquellen gemeinsam die erste Magnetschaltung mit einem magnetischen Dipolmoment erzeugt;
eine mit dem zweiten Ende gekoppelte Montageanordnung (160, 360, 460), wobei die Montageanordnung konfiguriert ist, um die Vielzahl von Magnetquellen an einem Raumfahrzeug zu befestigen; und
**gekennzeichnet durch**:
ein magnetisches Element (172, 372, 472), das von der Montageanordnung gestützt wird, wobei das magnetische Element in Bezug auf die Vielzahl von magnetischen Quellen durch die Montageanordnung derart positioniert ist, dass während des Betriebs des Hall-Effekt-Triebwerks das magnetische Element ein kompensierendes magnetisches Dipolmoment herstellt, das mit dem magnetischen Dipolmoment des Hall-Effekt-Triebwerks zusammenwirkt, um den Absolutwert des magnetischen Dipolmoments des Hall-Effekt-Triebwerks in der Richtung entlang der Längsachse zu reduzieren.

2. Hall-Effekt-Triebwerk nach Anspruch 1, wobei das magnetische Element (172, 372, 472) eines von einem diskreten Magnet oder einer elektromagnetischen Spule ist.

3. Hall-Effekt-Triebwerk nach Anspruch 1, wobei die Montageanordnung (160, 360, 472) einen Körper (164) und ein Stützelement einschließt, welches das magnetische Element (172, 372, 472) mit dem Körper koppelt, und wobei das Stützelement konfiguriert ist, um das magnetische Element axial von der Vielzahl von Magnetquellen in Bezug auf die Längsachse zu beabstanden.

4. Hall-Effekt-Triebwerk nach Anspruch 1, wobei das magnetische Element (172, 372, 472) zwei oder mehr diskrete Magnete einschließt, wobei jeder diskrete Magnet durch eines gebildet wird, ausgewählt aus der Gruppe, die Folgendes umfasst: ein bogenförmiges Segment, ein stabartiges Segment oder ein kastenartiges Segment.

## Revendications

1. Ensemble de propulseur à effet Hall (112, 312, 412) comprenant :
un propulseur à effet Hall (110, 310, 410) incluant une pluralité de sources magnétiques (140, 340) pour créer un premier circuit magnétique (56), la pluralité de sources magnétiques étant positionnées entre une première extrémité (128, 328, 428) et une seconde extrémité opposée (124, 324, 424) du propulseur à effet Hall, la pluralité de sources magnétiques définissant un axe longitudinal (100A, 300A, 400A) s'étendant au travers de la première extrémité et de la seconde extrémité, la première extrémité étant configurée en tant qu'extrémité de décharge, la pluralité de sources magnétiques étant configurées de telle sorte que, pendant le fonctionnement du propulseur à effet Hall, la pluralité de sources magnétiques créent collectivement le premier circuit magnétique présentant un moment dipolaire magnétique ;
un ensemble de montage (160, 360, 460) couplé à la seconde extrémité, l'ensemble de montage étant configuré pour fixer la pluralité de sources magnétiques sur un engin spatial ; et
**caractérisé par** :
un élément magnétique (172, 372, 472) supporté par l'ensemble de montage, l'élément magnétique étant positionné par rapport à la pluralité de sources magnétiques au moyen de l'ensemble de montage de telle sorte que, pendant le fonctionnement du propulseur à effet Hall, l'élément magnétique produise un moment dipolaire magnétique de compensation qui coopère avec le moment dipolaire magnétique du propulseur à effet Hall pour réduire la valeur absolue du moment dipolaire magnétique du propulseur à effet Hall dans la direction le long de l'axe longitudinal.

2. Propulseur à effet Hall selon la revendication 1, dans lequel l'élément magnétique (172, 372, 472) est l'un d'un aimant discret ou d'une bobine électromagnétique.

3. Propulseur à effet Hall selon la revendication 1, dans lequel l'ensemble de montage (160, 360, 472) inclut un corps (164) et un élément de support qui couple l'élément magnétique (172, 372, 472) au corps, et dans lequel l'élément de support est configuré pour espacer axialement l'élément magnétique de la pluralité de sources magnétiques par rapport à l'axe longitudinal.

4. Propulseur à effet Hall selon la revendication 1, dans lequel l'élément magnétique (172, 372, 472) inclut deux aimants discrets ou plus, chaque aimant discret étant formé par un segment sélectionné parmi le groupe comprenant : un segment en forme d'arc, un segment semblable à une tige ou un segment semblable à une boîte.
